Europäisches Patentamt

European Patent Office

Office européen des brevets

(11) Publication number: **0 309 080**
**A1**

## EUROPEAN PATENT APPLICATION

(21) Application number: 88306878.5

(51) Int. Cl.4: **C23C 18/16**

(22) Date of filing: 26.07.88

(30) Priority: 23.09.87 US 100317

(43) Date of publication of application:
29.03.89 Bulletin 89/13

(84) Designated Contracting States:
DE FR GB

(71) Applicant: MAGNETIC PERIPHERALS INC.
8100-34th Avenue South
Minneapolis Minnesota 55440(US)

(72) Inventor: Wu, Cherng-Dean
7445 Penn Avenue South No. 4
Richfield Minnesota 55423(US)

(74) Representative: Caro, William Egerton et al
J. MILLER & CO. Lincoln House 296-302 High
Holborn
London WC1V 7JH(GB)

(54) A process for controlling an electroless plating bath.

(57) A process for controlling an electroless plating bath to control the magnetic quality of a film deposited on a substrate, comprises the steps of measuring the surface potential of the substrate, determining activation time for potential increase, and subjecting the substrate to a true plating time calculateld by the formula:

$$t_{tr} = t_t - t_{act}$$

where, $t_{tr}$ is the true plating time, $t_t$ is total plating time and $t_{act}$ is the activation time.

EP 0 309 080 A1

## A PROCESS FOR CONTROLLING AN ELECTROLESS PLATING BATH

This invention relates to processes for controlling electroless plating baths. and more particularly but not limited to. processes for controlling electroless deposition of magnetic plating films.

Plating processes for memory disks in general can be divided into two categories: electrolytic plating or electroplating and electroless plating. Electroless plating differs from electroplating in that no electric current is involved in the deposition process. The driving force for the reaction is supplied by a reducing agent in a plating solution. A chemical reduction reaction proceeds spontaneously only in the direction of an overall lower Gibbs free energy if the temperature is high enough to overcome the activation energy barrier. Thus, conventional regulation of the rate of an electroless plating process is achieved by maintaining constant temperature. The rate of reaction cannot be precisely monitored and controlled due to difficulty caused by temperature fluctuations. In contrast current input in an electroplating process can be adjusted to any desired level.

It is known that plating is extremely sensitive to the surface conditions of a substrate being plated. The variations on a disk substrate, such as cleanliness, roughness, etc. are critical to yield distribution in magnetic film deposition. The control of yield distribution of magnetic properties of an electroless plated thin cobalt film on a disk substrate is therefore a great challenge in the manufacture of magnetic disks.

With regard to such magnetic disks, chemically deposited Co-P films have long been recognised as one of the magnetic layers for high density storage. The deposition process often utilised is electroless plating which basically involves Co (II) reduction by hypo-phosphite ions at the interface between a substrate and a plating solution. This phenomenon is heterogeneous in nature, and plating kinetics and the properties of the plated films are influenced by the surface conditions of the substrate and the structure of the double-layer across the interface. It is known that the magnetic properties of the resulting Co-P films are a complicated function of phosphorous content, crystalline size and thickness, which, in turn, are controllable by plating variables, primarily the formula of the plating solution, pH and temperature.

Since the interfacial properties vary significantly to those in the bulk of the plating solution, it is difficult to regulate precisely the plating process and, therefore, the magnetic properties of a resulting plated film. A parameter which reflects the process as a whole and is easily monitored for better process control is highly desirable.

The present invention seeks to provide an improved method to control electroless deposition of magnetic films and to provide an electroless plating parameter, which is easily measured and monitored, for greater yield control of magnetic plating.

According to one aspect of the present invention there is provided a process for controlling an electroless plating bath to control the magnetic quality of a film deposited on a substrate. the method being characterised by comprising the steps of:

a) measuring the surface potential of the substrate;

b) determining activation time for potential increase; and

c) subjecting the substrate to a true plating time calculated by the formula:

$$t_{tr} = t_t - t_{act}$$

where, $t_{tr}$ is the true plating time, $t_t$ is total plating time and $t_{act}$ is the activation time.

That is, by measuring surface potential it can be determined when potential transients cease and when a steady state potential occurs in an electroless plating bath. Once the steady state surface potential is reached, this potential jump is an indicator that true plating has commenced. By determining the plating time for a selected substrate based on true plating time, which is the total plating time less the activation time, greater yield control of deposited films is achieved.

The electroless plating bath may be one which deposits a Co-P film on the substrate.

A plurality of electrically inter-connected substrates may be plated simultaneously.

Preferably the activation time is predetermined and subsequent substrates are plated by the steps of:

d) monitoring the plating to determine when the surface potential has increased relatively sharply; and

e) subjecting the substrates to plating for the true plating time.

According to another aspect of the present invention, there is provided a process for controlling the yield distribution in an electroless plating in which a magnetic film is deposited on a substrate, the method being charac-terised by comprising: determining activation time of the plating in which transient potentials decrease and steady state surface potential occurs; and subjecting the substrate to a predetermined true plating time measured as extending beyond said activation time.

The invention is illustrated, merely by way of example, in the accompanying drawings, in which:-

Figure 1 is a graphic depiction of surface potential of electroless Co-P plating as a function of plating time and bath temperature;

Figure 2 is a graphic depiction of surface potential of Co-P plating as a function of plating time and various pre-treatments;

Figure 3 is a graph depiction of surface potential of Co-P plating as a function of plating time and varying pH of a plating bath;

Figure 4 is a graphic depiction of the dependence of $H_c$ and $B_{r \cdot t}$ for Co-P plating as a function of plating bath pH;

Figure 5 is a graphic depiction of surface potential of electroless Co-P plating (a) without ultra-sonic agitation, and (b) with ultra-sonic agitation;

Figure 6A is a graphic depiction of $B_{r \cdot t}$ as a function of total time of electroless Co-P plating, and Figure 6B is similar except as a function of true plating time; and

Figure 7A depicts distribution of polarity versus the remanence-thickness product for electroless Co-P plating of six examples plated simultaneously and which were inter-connected electrically, while Figure 7B is similar except that no inter-connection of the samples was made.

The present invention is the result of work performed to study the effects of various parameters on the quality of magnetic properties achieved in an electroless deposition process. It is believed that a discussion of these findings may assist in a better understanding of the benefits of the present invention which involves measurement of transient surface potential to achieve a narrower yield distribution of magnetic properties of films by adjusting plating time in the manner described hereinbelow.

Magnetic thin films (approximately $5 \times 10^{-6}$ cm (2 micro-inch) thick) of Co-P were made on aluminium-based Ni-P disk substrate material by electroless plating using a Co-P plating bath with the following composition:

TABLE 1

| BATH FORMULA | | |
| --- | --- | --- |
| Reagent | g/l | M(mole/l) |
| Borate, $Na_2B_4O7.10H_2O$ | 31.91 | 0.084 |
| Citrate, $Na_3C_6H_5O_7.2H_2O$ | 39.99 | 0.136 |
| Cobalt, $CoSO_4.7H_2O$ | 12.74 | 0.045 |
| Hypo-, $NaH_2PO_2.H_2O$ | 8.75 | 0.083 |
| (With an effective amount of Phosphate, $Na_2HPO4.7H_2O$ to achieve proper performance). | | |

It was known that the plating kinetics and film properties are a function of the surface conditions of the substrate as well as of the structure of a double-layer across an interface. Further, it was known that the magnetic properties of Co-P films are a complicated function of phosphorous content, crystalline size and thickness which, in turn, are controlled by plating variables, primarily bath formula, pH and temperature. Surface potential of the substrate during plating is directly determined by the nature of the interface and and reflects the plating process as a whole. In this work, the surface potential of electroless Co-P plating was measured as a function of plating time.

A potentiometer was connected directly between a Ni-P substrate and a reference electrode. The potentiometer basically measures an open circuit potential as no current flows during the electroless plating process. As the reactions occur on the Ni-P substrate this potential varies. In order to minimise the potential (IR) drop in the solution, a reference electrode (Ag-AgCl) was put close to the substrate, with the distance being the same for all the measurements taken.

3

## EXAMPLE 1

Magnetic platings were performed on Ni-P substrates using the following procedures:

(1) 3% HNO$_3$ pre-treatment 15 sec:

(2) Enbond NS-35 (Trade Mark) alkaline cleaner 3 min:

(3) cobalt plating 90 sec;

(4) the pH of the plating bath was adjusted to 8.05 by adding NaOH H$_2$SO$_4$;

(5) and the temperature for the runs was varied between 8°C and 83°C.

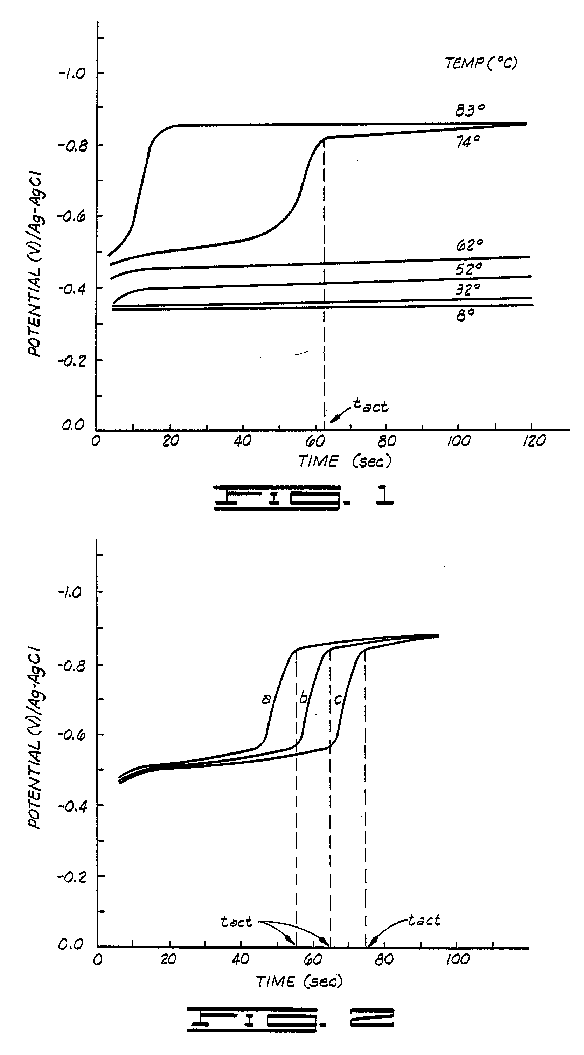

A de-ionised water spray rinse was applied between each of the pre-treatment steps. Magnetic platings were performed in accordance with the above procedures, unless otherwise stated. The magnetic properties, coercivity H$_c$ and remanence thickness product B$_{r,t}$, of the plated films were measured with a vibrating sample magnetometer (VSM). The results of the data are shown in Figure 1 with most data in Figure 1 representing a minimum of two independent runs, with the average taken to make the plots.

Surface potential for the electroless Co-P was measured during the magnetic plating using an Ag-AgCl electrode as a reference. Surface potential transients at different temperatures are presented in Figure 1. At 74°C, it was found that the surface potential jumped after a certain time to a final steady value. The same is true for higher temperatures except that the jumping in surface potential occurred earlier.

It is interesting to note that the final steady state surface potentials are the same, -0.85 V, and that the films showed magnetic properties only after the surface potential rises. The time required for the surface potential to rise is herein designated as the activation or nucleation time (t$_{act}$) of the deposit and is affected by the surface conditions of the substrate, as will become clear hereinbelow.

## EXAMPLE 2

Magnetic plating runs were performed as described in Example 1 with the exception that the temperature of the plating bath was held at 72°C, and the pre-treatment of the substrate samples was varied as follows:

| a. | 3% HNO$_3$ -<br>Enbond NS-35 -<br>30% HCl - | 15 sec<br>3 min<br>3 min |
|----|----|----|
| b. | 3% HNO$_3$ -<br>Enbond NS-35 -<br>1M NaOH - | 15 sec<br>3 min<br>3 min |
| c. | 3% HNO$_3$ -<br>Enbond NS-35 - | 15 sec<br>3 min. |

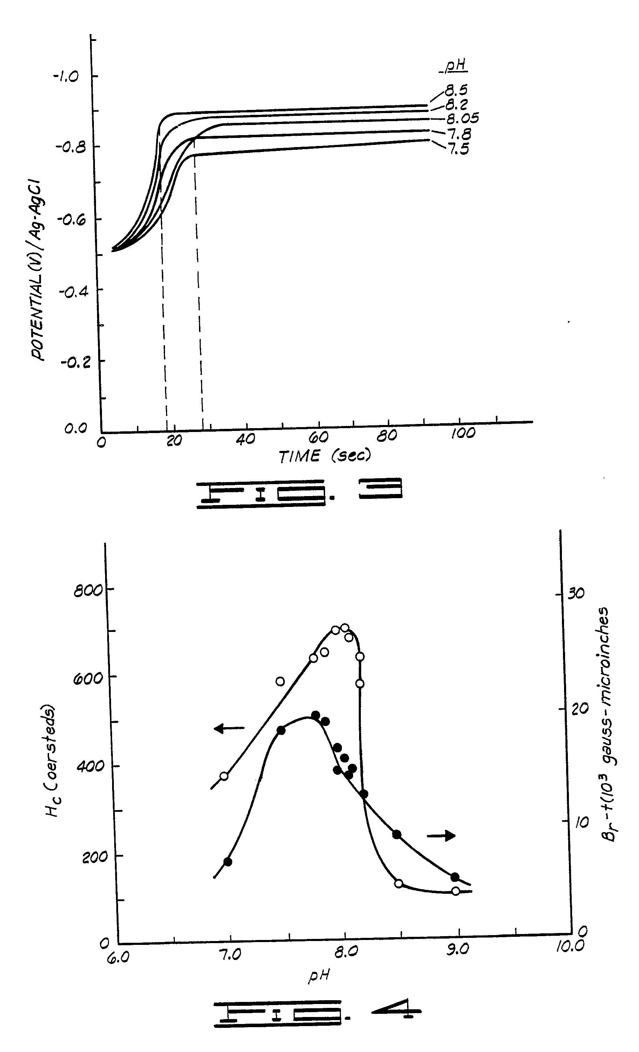

De-ionised water spray rinse was applied between each pre-treatment step. The results are shown in Figure 2, and the effect of varying the pre-treatment is evident. The temperature of the plating bath was 72°C for each of the runs. The data indicates that the H$_c$l pre-treatment (curve a) was active more quickly than the other pre-treatments (curves b and c).

The activation time, reflected in Figure 2, varied considerably. For H$_c$l pre-treatment (curve a), the activation time (t$_{act}$) was approximately 55 seconds; for NaOH pre-treatment (curve b), the activation time was approximately 65 seconds; and for regular HNO$_3$ Enbond pre-treatment, the activation time was approximately 75 seconds.

## EXAMPLE 3

Magnetic plating runs were performed as described in Example 1 hereinabove with the exception that the pH of the plating bath was varied, the plating bath being at a temperature of 85°C.

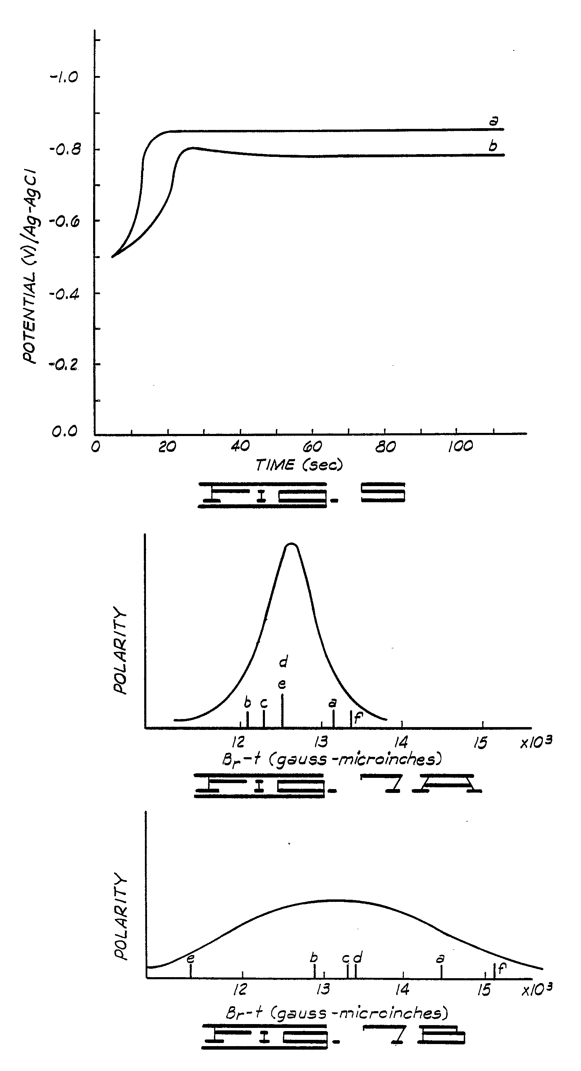

The data demonstrates that the activation time, which fell within a very narrow band of between 18 to 28 seconds, is somewhat insensitive to pH adjustment at the constant temperature investigated. However, the increase in pH values tends to drift the surface potential upwardly on the negative ordinate of Figure 3 (greater absolute value at a negative potential); reviewed in reverse, the final steady state potential changes in the positive direction as the pH decreases.

It is interesting to note that while the temperature greatly affects the activation time but not the final steady state potential, the solution pH changes the steady state potential quite a lot, but not the activation time.

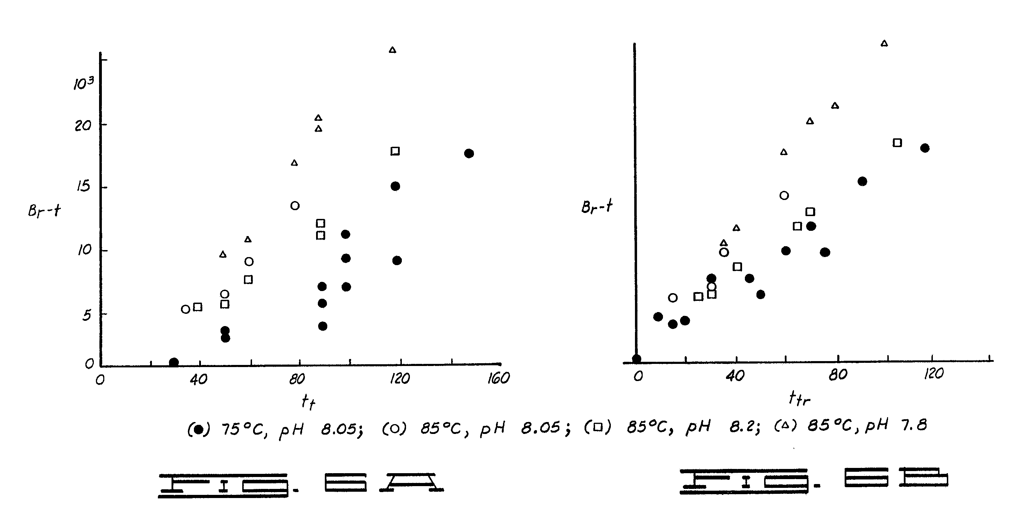

The dependence of the magnetic properties on pH in this Example is shown in Figure 4. As the pH of the solution is increased from 7.0, the coercivity $H_c$ starts to increase until the pH reaches 8.1, when the coercivity starts to drop rapidly. It is known that the nucleation and growth process are very different from low pH to those of high pH. Grain size decreases with inceading pH, and this continues until ultimately the super-paramagnetic range is approached with very small grains.

## EXAMPLE 4

Magnetic plating runs were performed as described in Example 1 hereinabove with the exception that agitation of the plating bath was varied. The temperature of the plating bath was a constant 83° C.

Figure 5 shows the effect of ultra-sonic agitation of the plating bath relative to that achieved without agitation. The ultra-sonic equipment used was a Bransonic Ultrasonic Cleaner No. 220, 50/60 Hz, 117 volts, 125 watts.

Curve a in Figure 5 represents the data taken in a bath having no ultra-sonic agitation. Curve b is the same bath with ultra-sonic agitation.

Agitation is commonly used in the metal plating of substrates. It has been used to decrease the concentration of polarisation with resulting finer grained deposits at higher plating rates. Agitation is also useful in preventing solution stratification and gas streaking. Among other advantages, improving smoothness and uniformity of the deposits are important. Ultra-sonic agitation of electroless plating was studied for both basic and practical purposes. It is known that the application of ultra-sonic energy during the plating process can be beneficial in achieving hardness, as significant changes in micro-structure of the Ni-P deposits have been reported in the literature. Also, deposits of Ni-P formed with ultra-sound agitation has a lower phosphorous content.

The plated film at 90 seconds of plating that was formed by curve b (with ultra-sonic agitation) was analysed, as was the plated film of curve a, and it was found that higher $B_{r\text{-}t}$ and lower $H_c$ was experienced with the agitated bath. To be more exact, about 61% increase (16725 to 26984 Gauss-micro-inch) in remanence-thickness product $B_{r\text{-}t}$ is ascribed to faster plating kinetics with agitation. However, the approximately 67% (653 to 216 Oe) decrease in coercivity $H_c$ is believed to be either the change in micro-structure or less phosphorous in the plated film.

## EXAMPLE 5

Magnetic plating runs were made using the same plating bath and pre-treatments of Example 1, except for the pH and bath temperature settings. The results of the remanence-thickness product $B_{r\text{-}t}$ measurements were analysed as function of both total (or apparent) plating time and true plating time as calculated from:

$$t_{tr} = t_t - t_{act}$$

where $t_{tr}$ is the true plating time, $t_t$ is the total (or apparent) plating time and $t_{act}$ is the activation time.

The data was analysed with the remanence-thickness product $B_{r\text{-}t}$ values as a function of the apparent plating time and the true plating time. The results are shown in Figures 6A and 6B. These figures show that only the true plating time need be taken into account in the control of the magnetic plating of the Co-P deposition film.

In summary, the surface potential for electroless Co-P plating on a Ni-P substrate was measured during the magnetic plating using an Ag-AgCl reference electrode. The transient potential of the electroless Co-P plating process jumped to a final steady value after a certain time (activation time) and the films showed magnetic quality only after this potential jump. Thus, the time for the potential jump can be obtained by monitoring the surface potential. The true magnetic plating time ($t_{tr}$) is equal to the actual time ($t_t$) minus the activation time ($t_{act}$) which is sensitive to the surface conditions.

Furthermore, the data presented in Figures 6A and 6B show that a narrow distribution of remanence-thickness product of $B_{r \cdot t}$ values was obtained in Figure 6B over that of Figure 6A. The plating runs for Figure 6B were controlled by determining the true plating time from the time that the surface potential jump occurred.

## EXAMPLE 7

Magnetic runs were conducted using six substrates in the plating bath described in Table 1. It was believed that the potentials of all the disks to be be plated would be identical if all the disks are connected together during plating. A special holder was made so that all of the substrates could be joined in parallel electrical inter-connection or separated. The pre-treatment for the substrates were as follows:

    a) 3% $HNO_3$, 15 sec
    b) 3% $HNO_3$, 1 min
    c) 3% $HNO_3$, 15 sec + alkaline NS-35, 30 sec
    d) 3% $HNO_3$, 15 sec + alkaline NS-35, 1 min
    e) 30% $H_c l$ dipping
    f) none

Identical plating runs were made on substrate sets, first electrically inter-connected, and second, in separated spaced apart juxaposition. The results of these runs are shown in Figure 7A (in which the substrate was electrically inter-connected during plating) and Figure 7B (in which the substrate was not connected). The graphs reflect polarity distribution versus remanence-thickness product as taken from a B - H loop measured by VSM.

Although the individual surface conditions were different, the conductive influence of surface potential equalised on all the surfaces. A narrower yield distribution within the group was achieved by simply connecting the disks (Figure 7A) and monitoring the true plating time by monitoring the potential jump.

The above Examples illustrate the important finding of the present invention. That is, that narrower yield distribution is obtained in electroless magnetic plating if the plating time is off-set by the activation time and relying upon the true plating time only. It is known that the difficulty in yield control is the great variation encountered in substrate surface conditions. By measuring the transient potential and regulating the magnetic plating process by true plating time, it is possible to minimise these influences.

The present invention relates to the process control of electroless plating baths by monitoring the surface potential, and more precisely, to narrowing the yield distribution of deposited magnetic films. This potential transient is a unique phenomenon in electroless plating and has not been considered before.

## Claims

1. A process for controlling an electroless plating bath to control the magnetic quality of a film deposited on a substrate, the method being characterised by comprising the steps of:
    a) measuring the surface potential of the substrate;
    b) determining activation time for potential increase; and
    c) subjecting the substrate to a true plating time calculated by the formula

$$t_{tr} = t_t - t_{act}$$

where, $t_{tr}$ is the true plating time, $t_t$ is total plating time and $t_{act}$ is the activation time.

2. A process as claimed in claim 1, characterised in that the electroless plating bath is one which deposits a Co-P film on the substrate.

3. A process as claimed in claim 1 or 2 characterised in that a plurality of electrically inter-connected substrates are plated simultaneously.

4. A process as claimed in claim 3 characterised in that the activation time is predetermined and subsequent substrates are plated by the steps of:

d) monitoring the plating to determine when the surface potential has increased relatively sharply; and

e) subjecting the substrates to plating for the true plating time.

5. A process for controlling the yield distribution in electroless plating in which a magnetic film is deposited on a substrate, the method being characterised by comprising: determining activation time of the plating in which transient potentials decrease and steady state surface potential occurs; and subjecting the substrate to a predetermined true plating time measured as extending beyond said activation time.

FIG. 1

FIG. 2

FIG. 3

FIG. 4

FIG. 5

FIG. 7A

FIG. 7B

EP 0 309 080 A1

(●) 75°C, pH 8.05; (○) 85°C, pH 8.05; (□) 85°C, pH 8.2; (△) 85°C, pH 7.8

FIG. 6A

FIG. 6B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 194 103 (UYEMURA) <br> ----- | | C 23 C 18/16 |

TECHNICAL FIELDS
SEARCHED (Int. Cl.4)

C 23 C
G 01 N

The present search report has been drawn up for all claims

| Place of search | Date of completion of the search | Examiner |
|---|---|---|
| THE HAGUE | 28-12-1988 | NGUYEN THE NGHIEP |

EPO FORM 1503 03.82 (P0401)